# EUROPÄISCHE PATENTANMELDUNG

(11) **EP 1 369 623 A2**
(43) Veröffentlichungstag der Anmeldung: **10.12.2003**
(21) Anmeldenummer: 03450111.4
(22) Anmeldetag: 07.05.2003
(51) Int. Cl.: F16H 25/24, F16H 25/20

(54) **Kupplungseinrichtung für eine Spindelmutter**

(30) Priorität: 07.06.2002 AT 8672002
(71) Anmelder: Hoerbiger Hydraulik GmbH, 86956 Schongau (DE)
(72) Erfinder: Ulbrich, Thomas, 86916 Kaufering (DE); Hubel, Stefan, 86720 Nördlingen (DE)
(74) Vertreter: Laminger, Norbert, Mag.

(57) **Zusammenfassung**

Eine Spindelantriebskupplung für einen Spindelantrieb weist eine Spindel (1) mit Außengewinde (1a) und eine die Spindel umschließende, von außen angetriebene Spindelmutter (5) mit in das Außengewinde (1a) der Spindel (1) verzahntem Innengewinde auf.

Um die hohe Untersetzung und große Kraftentfaltung sowie die kompakte, unter Belastung spielfreie Bauweise des Spindelantriebes mit einer mechanischen Überlastsicherung und einer Schalteinheit zu kombinieren, die es ermöglicht, die Spindel (1) unabhängig von den Lastzuständen des Motors durch eine Zug- bzw. Druckkraft an der Spindel (1) zu bewegen, ist das Innengewinde der Spindelmutter (5) durch zumindest ein mit seiner Rotationsachse in einer Ebene normal zur Spindellängsachse liegendes Gewinderad (2) und die Spindelmutter (5) als Gewinderadträger ausgebildet, wobei eine Bremsvorrichtung (3) für das oder jedes Gewinderad (2) vorgesehen ist.

## Beschreibung

Die Erfindung betrifft eine Spindelantriebskupplung für einen Spindelantrieb mit einer Spindel mit Außengewinde und einer die Spindel umschließenden, von außen angetriebenen Spindelmutter mit in das Außengewinde der Spindel verzahnten Innengewinde, und eine Betätigungsanordnung für bewegbare Teile an Fahrzeugen, insbesonders Türen oder Klappen der Karosserie, mit einer elektrisch antreibbaren Spindelmutter mit Innengewinde und einer normal auf die Ebene der Spindelmutter verstellbaren Spindel mit einem mit dem Innengewinde der Spindelmutter verzahnten Außengewinde.

Für mechanisch gesteuerte, elektrisch angetriebene Getriebe, die beispielsweise zum automatischen Öffnen und Schließen von Fahrzeugtüren und -klappen eingesetzt werden, kommen vornehmlich hydraulische Antriebe zum Einsatz. In der Anwendung von elektromechanischen Antrieben gestalten sich die mechanischen Umsetzungen von Zusatzfunktionen meist als sehr schwierig, insbesonders ist die Funktionalität des Einklemmschutzes bislang nicht praktikabel gelöst.

So zeigt die WO95/09959 eine Vorrichtung, die rein passiv das alleinige Verdrehen - ohne axiale Bewegung der Spindel - einer anderweitig angetriebenen Spindel in eine Richtung immer gestatten und die Gegenrichtung wahlweise sperren oder freigeben soll. Keinerlei Vorkehrungen sind getroffen, welche ein manuelles Hindurchschieben der Spindel in ihrer Längsrichtung durch die Spindelmutter ermöglichen. Dazu ist ein in eine Richtung wirkender Freilauf vorgesehen, sowie in der normalerweise gesperrten Gegenrichtung über eine steuerbare Reibkupplung das Mitdrehen des Freilaufes mit der Spindel gestattet.

Gemäß der US 5,740,894 A sind rein radial in bezug auf die Spindel hin oder von dieser weg verschiebbare "Bremsschuhe" anstelle von Gewinderädern mit Eingriff in die Spindel geoffenbart Diese Bremsschuhe sind jedoch nicht in Dauereingriff mit dem Spindelgewinde.

Aufgabe der vorliegenden Erfindung ist eine Kupplung, die die hohe Untersetzung und dadurch große Kraftentfaltung sowie die kompakte, unter Belastung spielfreie Bauweise einer elektromechanisch angetriebenen Spindel mit einer mechanischen Überlastsicherung und einer Schalteinheit kombiniert, die es ermöglicht, die Spindel unabhängig von den drei Lastzuständen des Motors "Motor treibt Spindel raus", "Motor zieht Spindel ein" und "Motor aus" durch eine Zug bzw. Druckkraft an der Spindel zu bewegen und somit eine manuelle Notbetätigung als auch einen Einklemmschutz zu realisieren.

Zur Lösung dieser Aufgabe ist erfindungsgemäß vorgesehen, dass das Innengewinde der Spindelmutter durch zumindest ein mit seiner Rotationsachse in einer Ebene normal zur Spindellängsachse liegendes Gewinderad und die Spindelmutter als Gewinderadträger ausgebildet ist, wobei eine Bremsvorrichtung für das oder jedes Gewinderad vorgesehen ist. Die Spindelmutter erhält anstelle des herkömmlichen Innengewindes eine Durchgangsbohrung mit dem Maß des Spindeldurchmessers und wird als Gewindewalzenträger ausgeführt, wobei das Innengewinde durch die in Gewindewalzenträger gelagerte Gewindewalzen gebildet wird. Diese Gewindewalzen haben nun zwei Freiheitsgrade. Zum einen die Rotation um die Spindellängsachse, zum zweiten um ihre körpereigene Achse. Dieser zweite Freiheitsgrad ermöglicht es, dass sich die Gewindewalzen auf der Außenverzahnung der Spindel in Spindelachsenrichtung abwälzen können. Die Spindel kann durch die "Spindelmutter" hindurch geschoben werden. Um die eigentliche Spindelfunktion herzustellen, wird dieser zweite Freiheitsgrad während des Normalbetriebs durch eine Bremsvorrichtung eingeschränkt. Vorteilhafterweise erfolgt diese Einschränkung durch eine reibschlüssige Verbindung in Form einer Bremse. Durch diesen durch die Geometrie und Bremskraft definierbaren Reibschluss wird die Funktion des mechanischen Einklemmschutzes gewährleistet. Die erforderliche Bremskraft wird im System selbst aufgebaut. Die Schalteinheit ist vorteilhafterweise mechanisch im System integriert.

Gemäß einer ersten Ausführungsform der Erfindung kann vorgesehen sein, dass die Bremsvorrichtung mit einer Schalteinheit gekoppelt ist, welche Schalteinheit aktiv schaltbar ist.

Vorzugsweise ist gemäß einer anderen Ausführungsform eine automatisch bei Betätigung des Antriebes der Spindelmutter betätigte Bremsvorrichtung vorgesehen.

Eine besonders vorteilhafte Ausführungsform für eine derartige, automatisch betätigte Bremsvorrichtung ist erfindungsgemäß dadurch gekennzeichnet, dass die Lagerflächen der Gewindewalzen kegelig ausgeführt sind, wobei die Lagerstellen im Gewindewalzenträger halbiert sind und eine Hälfte fest im Gewindewalzenträger und die andere Hälfte als mit einem Freiheitsgrad in radialer Richtung zur Achse der Gewindewalze geführte Bremsbrücke ausgebildet ist, zwischen welcher Bremsbrücke und dem Gewindewalzenträger eine Übertragungswalze eingesetzt ist, die sich zwischen dem angetriebenen Außenrad und der Bremsbrücke bei Relativbewegung der beiden zueinander verkeilt.

Dabei kann vorzugsweise eine Variante gewählt werden, bei welcher die Bremsbrücke durch Federn auf die Lagerfläche vorgespannt ist.

Gemäß einer anderen erfindungsgemäßen Ausführungsform kann die Bremsvorrichtung dadurch gebildet sein, dass eine formschlüssige Verbindung zwischen der oder jeder Gewindewalze und dem Gewindewalzenträger vorgesehen ist, welche Verbindung bei Relativbewegung der beiden zueinander in Eingriff kommt.

Die Aufgabe wird weiters durch eine Betätigungsanordnung gelöst, welche erfindungsgemäß dadurch gekennzeichnet, dass zwischen Spindelmutter und Spindel eine Spindelantriebskupplung gemäß einem der vorhergehenden Absätze vorgesehen ist.

Eine solche Kupplung weist verschiedene Vorteile auf. Durch die reibschlüssige, und auf die maximal auftretende Bremskraft einstellbare Verbindung der Bremsvorrichtung mit dem Gewinderad lässt es die Kupplung zu, bei still stehendem aber vor allem bei laufendem Motor, hier jedoch mit entsprechend höherem aber einstellbaren Kraftaufwand die Spindel festzuhalten, bei entsprechend hoher aber auslegbarer Kraft sogar auch in der der Antriebsrichtung entgegengesetzten Richtung von Außen und/oder manuell zu verschieben, was die Verwirklichung eines Einklemmschutzes und/oder einer manuellen Betätigung / Notbetätigung darstellt.

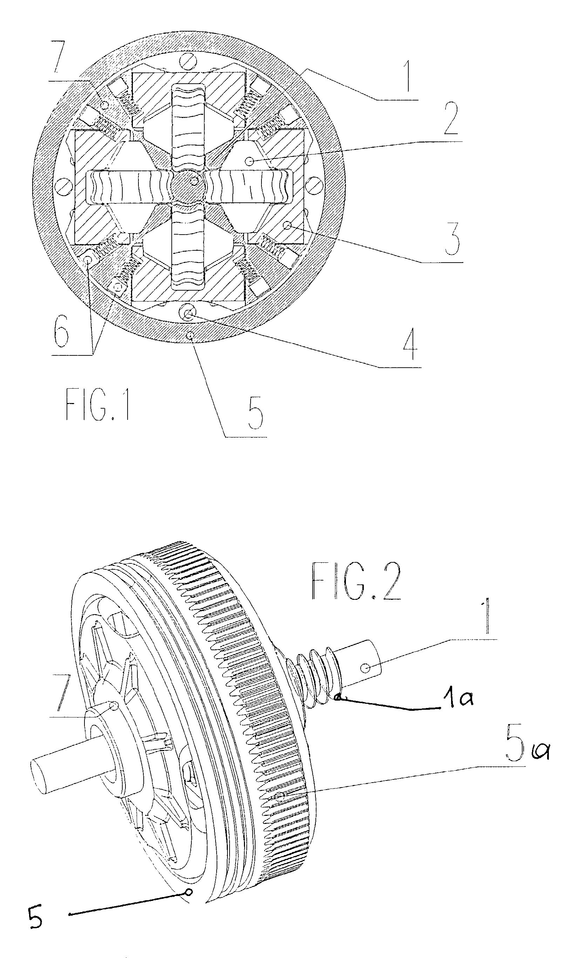

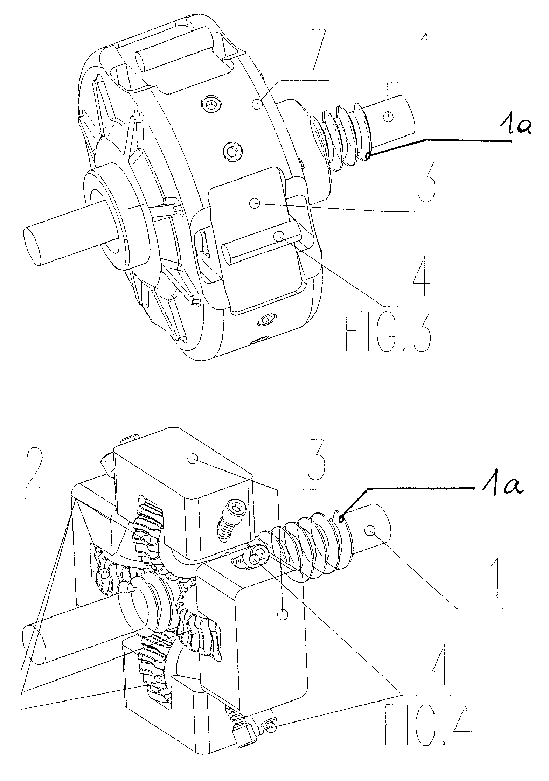

In der nachfolgenden Beschreibung soll die Erfindung anhand eines bevorzugten und in den beigefügten Zeichnungen dargestelltes Ausführungsbeispiel näher erläutert werden. Dabei zeigt die Fig. 1 einen Querschnitt durch eine erfindungsgemäße Spindelantriebskupplung, Fig. 2 ist eine perspektivische Ansicht der Kupplung der Fig. 1, Fig. 3 ist eine perspektivische Ansicht der Spindelantriebskupplung der Fig. 1 bei entferntem Außengehäuse und Fig. 4 ist eine perspektivische Ansicht der vier Gewindewalzenträger der Kupplung der Fig. 1.

Eine Spindel 1 kann zur Verstellung eines mit ihr verbundenen Bauteils, vorzugsweise einer Fahrzeugtür, einer Klappe für Verdecke oder Motor- bzw. Kofferraum od. dgl., in ihrer Axialrichtung verschoben werden, in dem eine diese mit einem Außengewinde 1a versehene Spindel 1 umgebende Spindelmutter 5 durch einen - nicht dargestellten - Antrieb verdreht wird. Dieser Antrieb kann über einen Riemen, eine Kette oder auch über ein in eine äußere Verzahnung 5a auf der Spindelmutter 5 eingreifende Zahnradverbindung erfolgen. Das Innengewinde der Spindelmutter 5 wird im dargestellten Beispiel durch vier Gewindewalzen 2 mit kegelförmig ausgebildeter Drehachse gebildet, welche Gewindewalzen 2 mit diesen Drehachsen in den Lagern von vier Gewindewalzenträgern 7 dreh- und bremsbar gelagert sind, welche Gewindewalzenträger 7 im inneren Bereich der Spindelmutter 5 vorgesehen sind. Jedoch kann wegen der Hinterschneidungen keine Gewindewalze 2 mehr als 90° der Spindelmantelfläche umschließen. Die Rotationsachse der Gewindewalzen 2 liegt in einer Ebene normal zur Längsachse der Spindel 1.

Die Verzahnungen der Gewindewalzen 2 sind ständig im Eingriff mit dem Außengewinde 1 a der Spindel 1, wobei die Gewindewalze 2 sowohl um die Längsachse der Spindel 1 entlang von deren Außengewinde 1a entlang gleiten kann, als auch um die eigene Achse in Lagern rotieren kann, wobei diese Rotation der Gewindewalzen 2 durch Bremsbrücken 3 unterbunden werden kann. Diese Bremsbrücken 3 können bei Relativbewegungen des äußeren Teils der Spindelmutter 5 auf die gegenüberliegenden Lagerflächen für die Achsen der Gewindewalzen 2 hin beaufschlagt werden, so dass sie gegenüber den Gewindewalzenträgern 7 einen Reibschluss und damit eine Bremskraft mit den kegelförmigen Achsen der Gewindewalzen 2 herstellen. Dazu können die Bremsbrücken 3 und die Achsen der Gewindewalzen 2 mittels jeweils zumindest einer Übertragungswalze 4 aufeinandergepresst werden, wenn sich diese Übertragungswalze 4 aufgrund der Relativbewegung zwischen Spindelmutter 5 und den Gewindewalzenträgern 7 verkeilt. Zusammen ergeben die Spindelmutter 5 und die Übertragungswalze 4 eine Art Schalteinheit, welche die Bremsvorrichtung, d.h. die Bremsbrücke 3 und die damit zusammenwirkende Reibfläche auf der Achse der Gewindewalze 2 automatisch betätigt oder löst.

In diesem letzteren, zuvor beschriebenen Zustand wird bei gleichzeitiger Rotation der Spindelmutter 2 und damit der nunmehr feststehenden Gewindewalzen 2 um die Spindellängsachse die Spindel 1 linear verschoben. Die maximal wirkende Kraft an der Spindel 1 ist durch die Untersetzungsverhältnisse in der Kupplung bestimmt, die Spindel 1 kann aber dennoch, mit höherem Kraftaufwand, festgehalten bzw. entgegen der Antriebsrichtung verschoben werden, indem die Bremskräfte zwischen Bremsbrücke 3 und Achsen der Gewindewalzen 2 überwunden werden.

Solange der Antrieb der Spindelmutter 2 nicht in Betrieb ist und damit keine Kraft wird auf die Bremsbrücken 3 aufgebracht wird, lässt sich die Spindel 1 ungehindert durch die Spindelmutter 2 hindurch verschieben, wobei die Gewindewalzen 2 um ihre Achsen auf dem Außengewinde 1a der Spindel 1 abgewälzt werden. Vorteilhafterweise werden die Bremsbrücken 3 jedoch mittels Vorspannfedern 6 auf die Achsen der Gewindewalzen 2 vorgespannt, so dass die Spindel 1 mit geringem, von der Federvorspannung der Bremsbrücken 3 abhängige Kraft linear durch die Spindelmutter 2 hin und her bewegt werden kann.

Alternative Ausführungsformen können abweichende Anordnung und Anzahl der Gewindewalzen 2 aufweisen, allenfalls auch das Bremsen und/oder Fixieren der Gewindewalzen 2 nicht durch Reibschluss, sondern durch Herstellen einer formschlüssigen Verbindung zwischen Bremsbrücke 3 und Achse der Gewindewalze 2 gewährleisten. Auch in der genauen Realisierung und Positionierung der Bremseinheit (Zweibackenbremse, Schlingenbremse, etc.) in der Spindelmutter 5 sind abweichende Bauweisen denkbar, ebenso in der Auslegung und Positionierung der Schalteinheit.

## Patentansprüche

1. Spindelantriebskupplung für einen Spindelantrieb mit einer Spindel mit Außengewinde und einer die Spindel umschließenden, von außen angetriebenen Spindelmutter mit in das Außengewinde der Spindel verzahnten Innengewinde, **dadurch gekennzeichnet, dass** das Innengewinde der Spindelmutter (5) durch zumindest ein mit seiner Rotationsachse in einer Ebene normal zur Spindellängsachse liegendes Gewinderad (2) und die Spindelmutter (5) als Gewinderadträger ausgebildet ist, wobei eine Bremsvorrichtung (3) für das oder jedes Gewinderad (2) vorgesehen ist.

2. Spindelantriebskupplung nach Anspruch 1, **dadurch gekennzeichnet, dass** die Bremsvorrichtung (3) mit einer Schalteinheit gekoppelt ist, welche Schalteinheit aktiv schaltbar ist.

3. Spindelantriebskupplung nach Anspruch 1, **dadurch gekennzeichnet, dass** eine automatisch bei Betätigung des Antriebes der Spindelmutter (5) betätigte Bremsvorrichtung (3) vorgesehen ist.

4. Spindelantriebskupplung nach Anspruch 3, **dadurch gekennzeichnet, dass** die Lagerflächen der Gewindewalzen (2) kegelig ausgeführt sind, wobei die Lagerstellen im Gewindewalzenträger (7) halbiert sind und eine Hälfte fest im Gewindewalzenträger und die andere Hälfte als mit einem Freiheitsgrad in radialer Richtung zur Achse der Gewindewalze (2) geführte Bremsbrücke (3) ausgebildet ist, zwischen welcher Bremsbrücke (3) und dem Außenrad der Spindelmutter (5) eine Übertragungswalze (4) eingesetzt ist, die sich zwischen dem angetriebenen Außenrad und der Bremsbrücke (3) bei Relativbewegung der beiden zueinander verkeilt.

5. Spindelantriebskupplung nach Anspruch 4, **dadurch gekennzeichnet, dass** die Bremsbrücke (3) durch Federn (6) auf die Lagerfläche vorgespannt ist.

6. Spindelantriebskupplung nach Anspruch 3, **dadurch gekennzeichnet, dass** eine formschlüssige Verbindung zwischen der oder jeder Gewindewalze (2) und dem Gewindewalzenträger (7) vorgesehen ist, welche Verbindung bei Relativbewegung der beiden zueinander in Eingriff kommt.

7. Betätigungsanordnung für bewegbare Teile an Fahrzeugen, insbesonders Türen oder Klappen der Karosserie, mit einer elektrisch antreibbaren Spindelmutter mit Innengewinde und einer normal auf die Ebene der Spindelmutter verstellbaren Spindel mit einem mit dem Innengewinde der Spindelmutter verzahnten Außengewinde, **dadurch gekennzeichnet, dass** zwischen Spindelmutter und Spindel eine Spindelantriebskupplung gemäß einem der Ansprüche 1 bis 6 vorgesehen ist.
